# EUROPÄISCHE PATENTSCHRIFT

(11) **EP 2 465 756 B1**
(45) Veröffentlichungstag und Bekanntmachung des Hinweises auf die Patenterteilung: **16.04.2014**
(21) Anmeldenummer: 11192791.9
(22) Anmeldetag: 09.12.2011
(51) Int. Cl.: B62D 33/02

(54) **Runge für einen Fahrzeugaufbau, insbesondere einen Nutzfahrzeugaufbau**
Stake for vehicle structure, in particular a utility vehicle structure
Ranche pour un montage de véhicule, notamment un montage de véhicule utilitaire

(30) Priorität: 20.12.2010 DE 102010061356
(43) Veröffentlichungstag der Anmeldung: 20.06.2012
(73) Patentinhaber: F. Hesterberg & Söhne GmbH & Co. KG, 58256 Ennepetal (DE)
(72) Erfinder: Tiedtke, Henning, 58256 Ennepetal (DE)
(74) Vertreter: Christophersen & Partner

(56) Entgegenhaltungen:
- EP-A1- 1 847 447
- EP-A2- 1 743 791
- WO-A2-2004/002803

## Beschreibung

Die Erfindung betrifft eine Runge für einen Fahrzeugaufbau, insbesondere einen Nutzfahrzeugaufbau, nach dem Oberbegriff des Patentanspruchs 1.

Das Festlegen der Rungen an z. B. seitlich durch Planen geschlossenen Nutzfahrzeug-Aufbauten erfolgt an fahrzeugfesten Rungenhaltern, die in Höhe des Ladebodens des Fahrzeuges befestigt sind. Die Verriegelung der Runge am Rungenhalter erfolgt von Hand, und zwar üblicherweise durch Strecken einer in dem Grundkörper der Runge angeordneten Kniehebelanordnung aus zwei gelenkverbundenen Hebelarmen. Üblicherweise ist der eine der beiden Hebelarme als verlängerter Betätigungshebel gestaltet, um den zum Strecken der Kniehebelanordnung erforderlichen Kraftaufwand gering zu halten.

Aus der EP 0 941 195 B1, und in ähnlicher Gestaltung aus der WO 01/51339 A1, ist eine Runge bekannt, die in losem Zustand in Fahrzeuglängsrichtung verschiebbar ist, und die zwecks Festlegung an dem Rungenhalter mit einem starr am unteren Ende des Rungengrundkörpers befestigten Querbolzen versehen ist. Durch Betätigen des als Kniehebelanordnung ausgebildeten Hubmechanismus gelangt der Querbolzen in eine gabelförmige Ausnehmung unten am Rungenhalter, mit der Folge einer formschlüssigen Verriegelung des äußersten unteren Rungenendes am Rungenhalter. Dieser Formschluss ist zwar ausreichend, um ein Lösen des unteren Rungenendes vom Rungenhalter zu vermeiden. Hingegen setzt der Formschluss einem nach-außen-Biegen oder nach-außen-Wölben der relativ langen Runge keinen nennenswerten Widerstand entgegen. Zu einem solchen Verformen der Runge kann es jedoch kommen, wenn die auf der Ladefläche abgestellten Lasten nicht richtig gesichert sind und sie sich, etwa bei Kurvenfahrt, nach fahrzeugaußen gegen den Grundkörper der Runge abstützen mit der Folge, dass dieser eine unerwünschte Biegung bzw. Wölbung nach außen erfährt.

Aus der EP 0 831 001 A1 ist ein Rungenhalter bekannt, an dem die Runge durch insgesamt zwei Verriegelungsstrukturen gesichert ist. Rungenseitig dient als untere Verriegelungsstruktur wiederum ein Querbolzen, wohingegen als obere Verriegelungsstruktur ein in dem Grundkörper der Runge vertikal verschiebbarer Riegel dient. Dieser ist durch Betätigung der Kniehebelanordnung von oben her in eine entsprechende Ausnehmung des Rungenhalters einschiebbar, und bewirkt so einen oberen Formschluss. Nachteilig an der Runge nach der EP 0 831 001 A1 ist, dass der den unteren Formschluss herbeiführende Querbolzen, da er nicht an dem Grundkörper sondern an dem Kniehebel befestigt ist, in eine an dem Rungenhalter ausgebildete Schale erst aktiv eingehängt werden muss. Hierzu müssen die Elemente der Runge so angesetzt werden, dass der an dem Kniehebel befestigte Querbolzen sicher in eine Position noch oberhalb der Schale gelangt. Diese Notwendigkeit einer Vorpositionierung erfordert, zumal in der Praxis an üblichen Nutzfahrzeugen eine Vielzahl derartiger Rungen zu lösen und wieder festzusetzen ist, zusätzliche Handgriffe.

Ein weiteres gattungsgemässiges Dokument ist zum Beispiel WO 2004/002803.

Der Erfindung liegt die **Aufgabe** zugrunde, eine in dem korrespondierenden Rungenhalter besonders einfach verriegelbare Runge zu schaffen, welche in Höhe des Ladenbodens wirkenden Kräften einen erhöhten Widerstand entgegenzusetzen vermag.

Die **Lösung** dieser Aufgabe ist bei einer Runge mit den eingangs angegebenen gekennzeichnet durch untere und obere Verriegelungsstrukturen, wobei die untere rungenseitige Verriegelungsstruktur an einem sich zwischen den beiden Seitenschenkeln des Profils erstreckenden Quersteg ausgebildet ist, und die obere rungenseitige Verriegelungsstruktur zweiteilig ist und sich zusammensetzt aus einer ersten Teilstruktur an einem an dem linken Seitenschenkel befestigten, linken Formteil, und einer zweiten Teilstruktur an einem an dem rechten Seitenschenkel befestigten, rechten Formteil.

Mit einer solcherart gestalteten Runge wird eine Mehrfachverriegelung an dem Rungenhalter in mindestens zwei unterschiedlichen Höhen erzielt. Durch den Formschluss zwischen dem unteren Ende der Runge und dem Rungenhalter wird nicht nur die Unlösbarkeit beider Elemente voneinander erreicht, sondern darüber hinaus verhindert, dass sich die Runge infolge von in Höhe des Ladebodens oder etwas oberhalb wirkenden Querlasten verformen, d. h. wölben kann. Trotz der erzielten Mehrfach-Verriegelung sind Aufbau und Bedienung der Runge besonders einfach. Zum einfachen Aufbau der Runge trägt bei, dass alle rungenseitigen Verriegelungsstrukturen starrer Bestandteil des Rungengrundkörpers sind, und somit bewegliche Teile wie z. B. Riegel im Bereich des Formschlusses zwischen Rungengrundkörper und Rungenhalter entfallen. Der Formschluss wird vielmehr einzig durch die Bewegung des Rungengrundkörpers selbst erzielt. Zur einfachen Bedienung der Runge trägt bei, dass diese zum Zwecke der Verriegelung lediglich unter ihrem Eigengewicht senkrecht herabhängen muss, bevor dann der integrierte Hubmechanismus betätigt wird. Es kommt zu einem ausschließlich vertikalen Anheben der Runge, bei dem die rungenseitigen Verriegelungsstrukturen jederzeit und zuverlässig in die an dem Rungenhalter ausgebildeten, korrespondierenden Verriegelungsstrukturen eintreten, und so den Formschluss sowohl in der unteren, als auch in der oberen Höhe bewirken.

Mit einer bevorzugten Ausgestaltung der Runge wird vorgeschlagen, dass der Quersteg der Mittelabschnitt eines im Wesentlichen U-förmigen, einteiligen Formstücks ist, dessen Schenkelabschnitte an dem linken bzw. an dem rechten Seitenschenkel des den Rungengrundkörper bildenden Profils befestigt sind.

Gemäß einer weiteren Ausgestaltung der Runge ist das Formstück durch jeweils eine Niet- oder Schraubverbindung an dem linken Seitenschenkel und an dem rechten Seitenschenkel befestigt.

Gemäß einer weiteren Ausgestaltung ist das Formstück durch einen ersten Formschluss mit dem linken, und durch einen zweiten Formschluss mit dem rechten Formteil verbunden.

Vorzugsweise befinden sich die Seitenschenkel an C-förmigen, einander zugewandt offenen Profilabschnitten des Profils, wobei das linke Formteil, das rechte Formteil und die Schenkelabschnitte des U-förmigen Formstücks bündig in den C-förmigen Profilabschnitten sitzen.

Mit einer weiteren Ausgestaltung wird vorgeschlagen, dass die Schenkelabschnitte des U-förmigen Formstücks nach oben gerichtete Druckflächen zur vertikalen Anlage des jeweiligen Formteils aufweisen.

Weitere Vorteile und Einzelheiten der erfindungsgemäßen Runge werden nachfolgend unter Bezugnahme auf die beigefügten Zeichnungen erläutert. Darin zeigen
- Fig. 1: eine Seitenansicht eines Nutzfahrzeugs mit einem mit mehreren Rungen versehenen Planenaufbau,
- Fig. 2: eine verkürzte Ansicht einer erfindungsgemäßen Runge,
- Fig. 3: eine vergrößerte Darstellung der in Fig. 2 mit III bezeichneten Einzelheit, nämlich des unteren Endes der Runge,
- Fig. 4: die Gegenstände nach Fig. 3, jedoch unter zeichnerischer Weglassung des Profils, aus dem der Rungengrundkörper besteht,
- Fig. 5: in einer den Fign. 3 und 4 vergleichbaren Perspektive ausschließlich den seitlich am Ladeboden des Fahrzeugs befestigten Rungenhalter,
- Fig. 6: eine Einzeldarstellung der rungenseitig vorhandenen Verriegelungselemente,
- Fig. 7: die Verriegelungselemente nach Fig. 6, formschlüssig miteinander verbunden,
- Fig. 8: eine Ansicht auf ausschließlich den Rungenhalter und
- Fig. 9: eine Ansicht des unteren Endes der Runge ohne Rungenhalter.

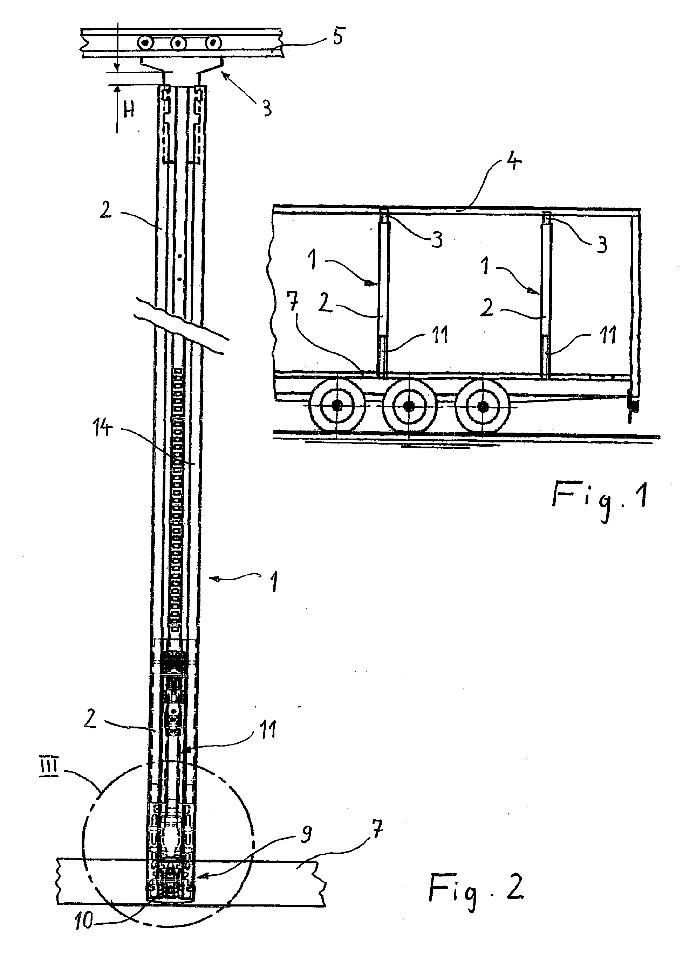

Fig. 1 zeigt in einer teilweisen Seitenansicht einen Nutzfahrzeuganhänger bzw. -auflieger in einer Bauart mit Planenaufbau. Nach dem Beiseiteschieben der Seitenplanen des Nutzfahrzeugaufbaus lassen sich dessen Seiten nahezu vollflächig öffnen, indem Rungen 1, welche als vertikale Verstrebungen zwischen dem Dach 4 des Nutzfahrzeugaufbaus und dessen Ladeboden 7 dienen, entriegelt und sodann beiseitegeschoben werden. Zum Beiseiteschieben ist, wie Fig. 2 zeigt, die Runge 1 an ihrem oberen Ende mit einem Rollapparat 3 versehen. Der Rollapparat 3 ist gegenüber dem Grundkörper 2 der Runge vertikal beweglich, und er ist ferner längs einer horizontalen Schiene 5 beweglich, die Bestandteil des Dachs 4 ist. Gegenüber dem Rollapparat 3 ist der Rungengrundkörper 2 über eine Hubhöhe H anhebbar, wozu in den Grundkörper 2 der Runge ein Hubmechanismus 11 eingebaut ist.

Um die Runge 1 während der Fahrt gegenüber dem Ladeboden 7 des Fahrzeugaufbaus festzulegen, ist außen am Ladeboden 7 ein Rungenhalter 10 befestigt, an dem sich das untere Ende der Runge durch Herbeiführen eines Formschlusses festlegen lässt. Dies erfolgt durch ein exakt vertikales Anheben des Rungengrundkörpers 2, wozu die Hubhöhe H zur Verfügung steht. Für dieses Anheben ist im unteren Teil der Runge 1 ein Hubmechanismus 11 in den Grundkörper 2 integriert. Durch das Anheben des Rungengrundkörpers 2 kommt es zu einem vertikalen Eingreifen starr an dem Rungengrundkörper ausgebildeter Verriegelungsstrukturen in starr an dem Rungenhalter 10 ausgebildete Verriegelungsstrukturen, mit der Folge einer Festlegung des unteren Endes 9 der Runge in Höhe des Ladebodens 7. Diese Festlegung erfolgt sowohl in vertikaler Richtung, als auch in horizontaler Richtung, d. h. in Fahrzeuglängsrichtung.

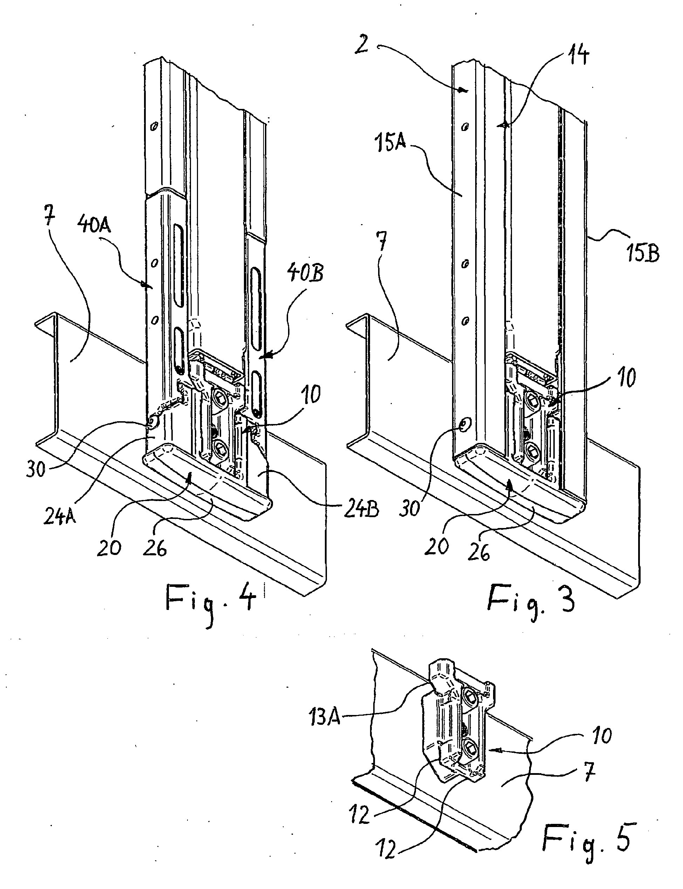

Gemäß Fig. 3 ist Hauptbestandteil des Rungengrundkörpers ein langgestrecktes Profil 14, vorzugsweise aus Stahlblech. Die in Fahrtrichtung und Gegenrichtung weisenden und sich quer zur Fahrzeuglängsrichtung erstreckenden Abschnitte des Profils 14 bilden dessen Seitenschenkel 15A, 15B. Das Profil 14 kann ein nach innen oder nach außen offenes Profil sein, also z. B. ein U-Profil oder C-Profil, oder aber ein geschlossenes Rechteckprofil. Zumindest in jenem unteren Bereich 9 des Rungengrundkörpers 2, in dem die formschlüssige Verbindung mit dem Rungenhalter 10 erfolgt, muss die nach fahrzeuginnen weisende Rückseite des Profils 14 offen sein, damit die Runge durch eine leichte Schwenkbewegung, wobei der Rollapparat 3 die Schwenkachse bildet, an den Rungenhalter 10 herangeschwenkt werden kann, bis die Rückseite der Runge an der Außenseite des Ladebodens 7 anliegt. Der aus Metallguss blockförmig gestaltete Rungenhalter 10 ist dann komplett in einem Freiraum 8 im Bereich des unteren Endees 9 des Grundkörpers 2 aufgenommen.

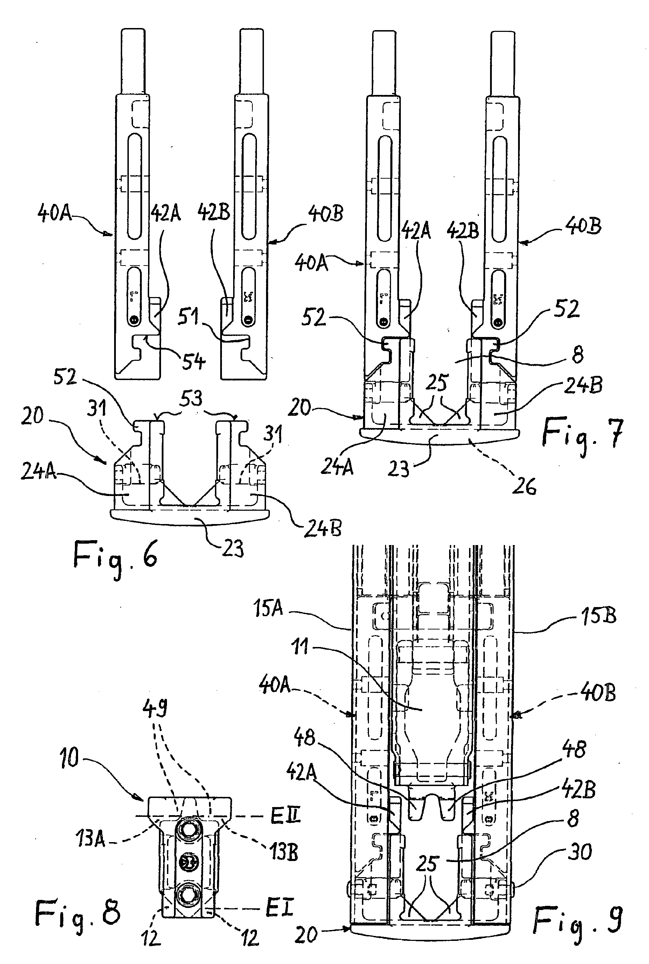

Während Fig. 3 das untere Ende der Runge vollständig zeigt, also einschließlich des Profils 14, welches den Rungengrundkörper 2 bildet, ist in Fig. 4 aus Gründen der Veranschaulichung das Profil 14 weggelassen, um die in dem Grundkörper 2 bzw. in dem Profil 14 angeordneten Einzelteile der Runge besser hervortreten zu lassen. Zu diesen Einzelteilen gehören ein linkes Formteil 40A, ein rechtes Formteil 40B und ein Formstück 20. Diese drei Elemente sind in Fig. 6 noch einmal einzeln dargestellt, und in Fig. 7 in ihrer baulichen Zuordnung innerhalb des Rungengrundkörpers.

Das linke Formteil 40A ist fest im linken Abschnitt des Profils 14 angeordnet und kann zu diesem Zweck an dem linken Seitenschenkel 15A des Profils 14 befestigt sein, z. B. durch Vernieten des Formteils 40A mit dem Seitenschenkel 15A. In analoger Weise ist das rechte Formteil 40B im rechten Abschnitt des Profils 14 angeordnet und stützt sich an dem rechten Seitenschenkel 15B ab. Auch hier erfolgt die Verbindung vorzugsweise durch Vernieten.

Zwischen den beiden so zueinander beabstandeten Formteilen 40A, 40B liegt der obere Teil des Freiraums 8 für den Rungenhalter 10, an dem die beiden Formteile 40A, 40B links bzw. rechts verriegelbar sind.

Das Formstück 20 bildet das äußerste untere Ende des Grundkörpers 2. Es ist einteilig und in Ansicht im Wesentlichen U-förmig gestaltet. Es setzt sich zusammen aus einem Quersteg 23 als Mittelabschnitt, einem in Verlängerung des linken Formteils 40A angeordneten linken Schenkelabschnitt 24A, und einem in Verlängerung des rechten Formteils 40B angeordneten rechten Schenkelabschnitt 24B.

Der Quersteg 23 kann an seiner Unterseite als Handgriff 26 zum leichteren Anheben des Grundkörpers 2 gestaltet ist. Das Formstück 20 besteht, ebenso wie die beiden Formteile 40A, 40B, aus Metallguss oder Sintermetall.

Zur Befestigung des Formstücks 20 in dem Profil 14 stützt sich der linke Schenkelabschnitt 24A von innen gegen den linken Seitenschenkel 15A, und der rechte Schenkelabschnitt 24B von innen gegen den rechten Seitenschenkel 15B des Profils 14 ab. Die Verbindung erfolgt durch Nieten 30, die durch entsprechende Bohrungen des Seitenschenkels 15A, 15B hindurch gesetzt sind. Zur Bildung eines Widerlagers für das Niet 30 sind die beiden Schenkelabschnitte 24A, 24B jeweils mit geeigneten Sackbohrungen 31 versehen.

Zwischen den durch den Quersteg 23 zueinander beabstandeten Schenkelanschnitten 24A, 24B befindet sich der untere Teil des Freiraums 8, der bei geschlossener Runge den Rungenhalter 10 aufnimmt.

An dem Mittelabschnitt des Formstücks 20 ist eine untere, rungenseitige Verriegelungsstruktur angeformt. Beim Ausführungsbeispiel ist diese Verriegelungsstruktur aufgeteilt auf eine linke und eine rechte Verriegelungsstruktur 25. Beide sind jeweils als Dreieck im Winkel zwischen Quersteg 23 und dem Schenkelabschnitt 24A, 24B gestaltet.

Gemäß Fig. 8 ist, korrespondierend zu der unteren Verriegelungsstruktur 25 der Runge, an dem Rungenhalter 10 eine korrespondierende untere Verriegelungsstruktur 12 vorhanden. Es handelt sich um nach unten hin offene Ausnehmungen an dem Rungenhalter 10. Diese Ausnehmungen nehmen beim Ausführungsbeispiel die Dreieckform der rungenseitigen unteren Verriegelungsstrukturen 25 auf.

Für den verbesserten Formschluss zwischen Runge und Rungenhalter ist ferner eine zweigeteilte obere Verriegelungsstruktur 42A, 42B vorhanden. Diese befindet sich an dem linken Formteil 40A und an dem rechten Formteil 40B, wobei die linke Teilstruktur 42A ausschließlich an dem linken Formteil 40A, und die rechte Teilstruktur 42B ausschließlich an dem rechten Formteil 40B ausgebildet ist. Hierzu korrespondierend ist der Rungenhalter 10 links und rechts mit jeweils einer Verriegelungsstruktur 13A bzw. 13B versehen. Beide sind zumindest nach unten hin offen, so dass beim exakt vertikalen Anheben des Rungengrundkörpers die rungenseitigen Teilstrukturen 42A, 42B in die linken bzw. rechten Verriegelungsstrukturen 13A, 13B des Rungenhalters einfahren dort in einen Hintergriff gelangen.

Es findet, wie in Fig. 8 illustriert, durch das gegenseitige Hintergreifen der Verriegelungsstrukturen ein erster Formschluss in einer unteren Ebene El und ein zweiter Formschluss in einer oberen Ebene Ell statt.

Der Hubmechanismus 11 zum Anheben des Rungengrundkörpers 2 ist auf der Zeichnung nicht in Einzelheiten dargestellt. Dieser kann als Kniehebelkonstruktion ausgeführt sein, wie dies im Einzelnen in der EP 0 941 195 B1 beschrieben ist. Ein unterer Hebel einer aus zwei gelenkig verbundenen Hebeln zusammengesetzten Kniehebelkonstruktion wird mit seinem unteren Hebelende 48 von oben her in eine nach oben offene Mulde 49 an dem Rungenhalter 10 eingesetzt. Sodann wird der Kniehebel gestreckt mit der Folge eines vertikalen Anhebens des kompletten Grundkörpers 2 der Runge. Hierbei fahren die rungenseitigen Verriegelungsstrukturen 25, 42A, 42B hinter die am Rungenhalter ausgebildeten, ortsfesten Verriegelungsstrukturen 12, 13A, 13B.

Gemäß den Figuren 6 und 7 sind die Schenkelabschnitte 24A, 24B mit nach oben gerichteten Druckflächen 53 versehen, an denen sich Gegenflächen 54 des jeweiligen Formteils 40A, 40B abstützen.

Die beiden Formteile 40A, 40B sind in Rungenlängsrichtung formschlüssig mit dem Formstück 20 verbunden. Erreicht wird der Formschluss durch sich hintergreifende Vor- und Rücksprünge 51, 52 einerseits an den Formteilen 40A, 40B und andererseits an den dazu fluchtenden Schenkelabschnitten 24A, 24B.

**Bezugszeichenliste**

| | | | |
|---|---|---|---|
| 1 | Runge | EI | untere Ebene |
| 2 | Grundkörper der Runge | EII | obere Ebene |
| 3 | Rollapparat | H | Hub |
| 4 | Dach | | |
| 5 | Schiene | | |
| 7 | Ladeboden | | |
| 8 | Freiraum | | |
| 9 | unteres Ende der Runge | | |
| 10 | Rungenhalter | | |
| 11 | Hubmechanismus | | |
| 12 | Verriegelungsstruktur | | |
| 13A | Verriegelungsstruktur | | |
| 13B | Verriegelungsstruktur | | |
| 14 | Profil | | |
| 15A | Seitenschenkel | | |
| 15B | Seitenschenkel | | |
| 20 | Formstück | | |
| 23 | Quersteg | | |
| 24A | linker Schenkelabschnitt | | |
| 24B | rechter Schenkelabschnitt | | |
| 25 | Verriegelungsstruktur | | |
| 26 | Handgriff | | |
| 30 | Niet | | |
| 31 | Sackbohrung | | |
| 40A | linkes Formteil | | |
| 40B | rechtes Formteil | | |
| 42A | Verriegelungsstruktur | | |
| 42B | Verriegelungsstruktur | | |
| 48 | Hebelende | | |
| 49 | Mulde | | |
| 51 | Vor- bzw. Rücksprung | | |
| 52 | Vor- bzw. Rücksprung | | |
| 53 | Druckfläche | | |
| 54 | Gegenfläche | | |

## Patentansprüche

1. Runge für einen Fahrzeugaufbau, insbesondere einen Nutzfahrzeugaufbau, bestehend aus
- einem als Profil (14) mit linken und rechten Seitenschenkeln (15A, 15B) ausgebildeten Grundkörper (2),
- einem gegenüber dem oberen Ende des Grundkörpers (2) vertikal beweglichen Rollapparat (3), mit dem der Grundkörper (2) in einer horizontalen Schiene (5) geführt ist, die sich längs des Dachs (4) des Fahrzeugaufbaus erstreckt,
- einem in Höhe des Fahrzeugladebodens (7) befestigten Rungenhalter (10), gegen den das untere Ende der Runge verriegelbar ist, und
- einem Hubmechanismus (11) zum vertikalen Anheben des Grundkörpers (2) und gleichzeitigen Verriegeln dessen unteren Endes (9) an dem Rungenhalter,
- jeweils an dem Rungenhalter (10) und an dem Grundkörper (2) ausgebildete, korrespondierende Verriegelungsstrukturen,
**gekennzeichnet durch** untere und obere Verriegelungsstrukturen, wobei die untere rungenseitige Verriegelungsstruktur (25) an einem sich zwischen den beiden Seitenschenkeln (15A, 15B) des Profils (14) erstreckenden Quersteg (23) ausgebildet ist, und die obere rungenseitige Verriegelungsstruktur (42A, 42B) zweiteilig ist und sich zusammensetzt aus einer ersten Teilstruktur (42A) an einem an dem linken Seitenschenkel (15A) befestigten, linken Formteil (40A), und einer zweiten Teilstruktur (42B) an einem an dem rechten Seitenschenkel (15B) befestigten, rechten Formteil (40B).

2. Runge nach Anspruch 1, **dadurch gekennzeichnet, dass** die Formteile (40A, 40B) durch einen Freiraum (8) getrennt sind, in dem der Rungenhalter (10) angeordnet ist.

3. Runge nach Anspruch 1 oder 2, **dadurch gekennzeichnet, dass** der Quersteg (23) der Mittelabschnitt eines einteiligen, im wesentlichen U-förmigen Formstücks (20) ist, dessen Schenkelabschnitte (24A, 24B) an dem linken (15A) bzw. an dem rechten (15B) Seitenschenkel des Profils (14) befestigt sind.

4. Runge nach Anspruch 3, **dadurch gekennzeichnet, dass** in dem Freiraum (8) zwischen den Schenkelabschnitten (24A, 24B) der Rungenhalter (10) angeordnet ist.

5. Runge nach Anspruch 3 oder 4, **dadurch gekennzeichnet, dass** das Formstück (20) jeweils durch eine Niet- oder Schraubverbindung (30) an dem linken Seitenschenkel (15A) und an dem rechten Seitenschenkel (15B) befestigt ist.

6. Runge nach einem der Ansprüche 3 bis 5, **dadurch gekennzeichnet, dass** das Formstück (20) durch einen ersten Formschluss (51, 52) mit dem linken Formteil (40A), und durch einen zweiten Formschluss (51, 52) mit dem rechten Formteil (40B) verbunden ist.

7. Runge nach einem der vorangehenden Ansprüche, **dadurch gekennzeichnet, dass** sich die Seitenschenkel (15A, 15B) an C-förmigen, einander zugewandt offenen Profilabschnitten des Profils (14) befinden, und dass das linke Formteil (40A), das rechte Formteil (40B) und die Schenkelabschnitte (24A, 24B) des Formstücks (20) bündig in den C-förmigen Profilabschnitten sitzen.

8. Runge nach Anspruch 7, **dadurch gekennzeichnet, dass** die Schenkelabschnitte (24A, 24B) des Formstücks (20) mit nach oben weisenden Druckflächen (53) zur Anlage des jeweiligen Formteils (40A, 40B) versehen sind.

9. Runge nach einem der vorangehenden Ansprüche, **dadurch gekennzeichnet, dass** die oberen Verriegelungsstrukturen (13A, 13B) des Rungenhalters (10) links und rechts an diesem angeordnet sind, und dass die Verriegelungsstrukturen (13A, 13B) sowohl zur jeweiligen Seite hin als auch nach unten hin offen sind.

10. Runge nach einem der vorangehenden Ansprüche, **dadurch gekennzeichnet, dass** die Unterseite des Querstegs (23) als Handgriff (26) gestaltet ist.

## Claims

1. A stanchion for a vehicle superstructure, in particular a utility vehicle superstructure, comprising
- a main body (2) designed in the form of a profile (14) with left-hand and right-hand side arms (15A, 15B),
- a rolling apparatus (3) which is movable vertically with respect to the upper end of the main body (2) and by which the main body (2) is guided in a horizontal rail (5) which extends along the roof (4) of the vehicle superstructure,
- a stanchion holder (10) which is fastened at the level of the vehicle loading floor (7) and against which the lower end of the stanchion is capable of being locked, and
- a lifting mechanism (11) for lifting the main body (2) vertically and for locking the lower end (9) of the latter on the stanchion holder at the same time,
- corresponding locking structures formed in each case on the stanchion holder (10) and on the main body (2),
**characterized by** lower and upper locking structures, wherein the lower locking structure (25) towards the stanchion is formed on a transverse web (23) extending between the two side arms (15A, 15B) of the profile (14), and the upper locking structure (42A, 42B) towards the stanchion is in two parts and is formed from a first partial structure (42A) on a left-hand moulded part (40A) fastened to the left-hand side arm (15A), and a second partial structure (42B) on a right-hand moulded part (40B) fastened to the right-hand side arm (15B).

2. A stanchion according to Claim 1, **characterized in that** the moulded parts (40A, 40B) are separated by a free space (8) in which the stanchion holder (10) is arranged.

3. A stanchion according to Claim 1 or 2, **characterized in that** the transverse web (23) is the middle portion of a one-piece, substantially U-shaped moulded piece (20), the arm portions (24A, 24B) of which are fastened to the left-hand (15A) and right-hand (15B) side arms respectively of the profile (14).

4. A stanchion according to Claim 3, **characterized in that** the stanchion holder (10) is arranged in the free space (8) between the arm portions (24A, 24B).

5. A stanchion according to Claim 3 or 4, **characterized in that** the moulded piece (20) is fastened by a rivet or screw connection (30) to the left-hand side arm (15A) and to the right-hand side arm (15B) in each case.

6. A stanchion according to any one of Claims 3 to 5, **characterized in that** the moulded piece (20) is connected by a first positively locking arrangement (51, 52) to the left-hand moulded part (40A) and by a second positively locking arrangement (51, 52) to the right-hand moulded part (40B).

7. A stanchion according to any one of the preceding Claims, **characterized in that** the side arms (15A, 15B) are situated on C-shaped portions of the profile (14) which are open so as to face each other, and the left-hand moulded part (40A), the right-hand moulded part (40B) and the arm portions (24A, 24B) of the moulded piece (20) are mounted flush in the C-shaped profile portions.

8. A stanchion according to Claim 7, **characterized in that** the arm portions (24A, 24B) of the moulded piece (20) are provided with upwardly directed thrust faces (53) for the abutment of the respective moulded part (40A, 40B).

9. A stanchion according to any one of the preceding Claims, **characterized in that** the upper locking structures (13A, 13B) of the stanchion holder (10) are arranged to the left and the right on the latter, and the locking structures (13A, 13B) are open both to the respective side and towards the bottom.

10. A stanchion according to any one of the preceding Claims, **characterized in that** the underside of the transverse web (23) is designed in the form of a handle (26).

## Revendications

1. Rancher pour une plate-forme carrossée d'un véhicule, en particulier pour une plate-forme carrossée d'un véhicule utilitaire, comportant
- un corps de base (2) réalisé sous la forme d'un profilé (14) avec des côtés latéraux (15A, 15B) gauche et droit,
- un système de roulement (3), qui est mobile verticalement par rapport à l'extrémité supérieure du corps de base (2) et par lequel le corps de base (2) est guidé dans un rail (5) horizontal, qui s'étend le long du toit (4) de la plate-forme carrossée,
- un support de rancher (10), qui est fixé à la hauteur du fond de chargement (7) du véhicule et contre lequel l'extrémité inférieure du rancher est verrouillable, et
- un mécanisme de levage (11) pour le levage vertical du corps de base (2) et pour le verrouillage simultané de l'extrémité inférieure (9) de celui-ci sur le support de rancher,
- des structures de verrouillage correspondantes, réalisées respectivement sur le support de rancher (10) et sur le corps de base (2),
**caractérisé par** des structures de verrouillage inférieure et supérieure, la structure de verrouillage inférieure (25) du côté du rancher étant réalisée sur une traverse (23) qui s'étend entre les deux côtés latéraux (15A, 15B) du profilé (14), et la structure de verrouillage supérieure (42A, 42B) du côté du rancher est en deux parties et est constituée par une première structure partielle (42A) sur une partie profilée (40A) gauche, fixée au côté latéral gauche (15A), et par une deuxième structure partielle (42B) sur une partie profilée (40B) droite, fixée au côté latéral droit (15B).

2. Rancher selon la revendication 1, **caractérisé en ce que** les parties profilées (40A, 40B) sont séparées par un espace libre (8) dans lequel est disposé le support de rancher (10).

3. Rancher selon la revendication 1 ou 2, **caractérisé en ce que** la traverse (23) est la zone centrale d'une pièce profilée (20) monobloc sensiblement en forme de U, dont les branches (24A, 24B) sont fixées respectivement au côté latéral gauche (15A) et au côté latéral droit (15B) du profilé (14).

4. Rancher selon la revendication 3, **caractérisé en ce que** le support de rancher (10) est disposé dans l'espace libre (8) entre les branches (24A, 24B).

5. Rancher selon la revendication 3 ou 4, **caractérisé en ce que** la pièce profilée (20) est fixée dans chaque cas par un assemblage riveté ou un assemblage vissé (30) au côté latéral gauche (15A) et au côté latéral droit (15B).

6. Rancher selon l'une quelconque des revendications 3 à 5, **caractérisé en ce que** la pièce profilée (20) est reliée à la partie profilée gauche (40A) par un premier assemblage emboîté (51, 52) et à la partie profilée droite (40B) par un deuxième assemblage emboîté (51, 52).

7. Rancher selon l'une quelconque des revendications précédentes, **caractérisé en ce que** les côtés latéraux (15A, 15B) sont situés sur des parties profilées ouvertes en forme de C, orientées l'une vers l'autre, du profilé (14), et **en ce que** la partie profilée gauche (40A), la partie profilée droite (40B) et les branches (24A, 24B) de la pièce profilée (20) sont situées à fleur dans les parties profilées en forme de C.

8. Rancher selon la revendication 7, **caractérisé en ce que** les branches (24A, 24B) de la pièce profilée (20) sont munies de surfaces de pression (53), dirigées vers le haut et destinées à recevoir en appui la pièce profilée (40A, 40B) correspondante.

9. Rancher selon l'une quelconque des revendications précédentes, **caractérisé en ce que** les structures de verrouillage (13A, 13B) supérieures du support de rancher (10) sont disposées à gauche et à droite de celui-ci, et **en ce que** les structures de verrouillage (13A, 13B) sont ouvertes vers le côté correspondant, de même que vers le bas.

10. Rancher selon l'une quelconque des revendications précédentes, **caractérisé en ce que** la face inférieure de la traverse (23) est conçue sous forme de poignée (26).
